# DEMANDE DE BREVET EUROPEEN

(11) **EP 4 647 223 A1**
(43) Date de publication de la demande: **12.11.2025**
(21) Numéro de dépôt: 25174385.2
(22) Date de dépôt: 06.05.2025
(51) Int. Cl.: B27H 5/00, B27H 5/04, B32B 21/13, B65D 8/00, B65D 6/34, B27H 3/02, B27F 1/08, B27H 5/02, B27M 3/00, B65D 6/02

(54) **MERRAIN POUR LA RÉALISATION DE DOUELLES DE CONTENANT EN BOIS**

(30) Priorité: 07.05.2024 FR 2404811
(71) Demandeur: NZT, 17100 Saintes (FR)
(72) Inventeur: TOMBU, Nicolas, 17100 LES GONDS (FR)
(74) Mandataire: Plasseraud IP

(57) **Abrégé**

La présente invention concerne un merrain (1) pour la réalisation d'une douelle de contenant en bois tel qu'une barrique, constitué :
- d'une première lame de bois (3) réalisée dans un premier bois, dit essence de bois raréfiée, dont une face est destinée à former la face intérieure de la douelle, l'épaisseur de cette première lame de bois (3) étant inférieure ou égale à 20 mm, de préférence inférieure ou égale à 17 mm, et encore mieux inférieure ou égale à 15 mm,
- une seconde lame de bois (2) dont une face est destinée à former la face extérieure de la douelle, ladite seconde lame étant réalisée dans un second bois, différent du premier bois,
- lesdites première et seconde lames de bois étant uniquement assemblées entre elles par un assemblage à tenon et mortaise, sans aucun liant adhésif tel qu'une colle,
- la face de ladite seconde lame, opposée à celle destinée à former la face extérieure de la douelle, dite face d'assemblage, comprenant un ou plusieurs tenons (21) formant saillie de celle-ci en s'étendant uniquement le long de l'axe longitudinal dudit merrain, la face de la première lame de bois (3), opposée à celle destinée à former la face intérieure de la douelle, comportant pour chaque tenon (21) de la face d'assemblage (23) de ladite seconde lame de bois (2), une mortaise correspondante s'étendant le long de l'axe longitudinal dudit merrain.

## Description

### Domaine technique

La présente invention se rapporte au domaine de la fabrication de contenant en bois pour élever et stocker des liquides, en particulier du vin ou des boissons alcoolisées telles que des spiritueux.

Elle concerne plus particulièrement un merrain monolithique pour la réalisation de douelles d'un contenant en bois.

### Technique antérieure

L'élevage en fûts en bois, en particulier de chêne, est considéré comme une étape essentielle dans la maturation des vins et des spiritueux.

Il est ainsi connu qu'un vin mis en fût, imprègne le bois de sorte que des composés chimiques extractibles du bois, par exemple des tanins, sont relargués dans le vin, lui conférant des caractéristiques organoleptiques spécifiques.

De plus, une lente pénétration d'oxygène au travers du bois, apporte une oxydation ménagée des composés présents dans le vin, modifiant positivement les caractéristiques organoleptiques de ce dernier.

On sait également que les polysaccharides libérés par le bois diminuent l'astringence du vin et qu'une pluralité d'arômes, également libérée par le bois, a un impact significatif sur le goût du vin.

La réalisation de futaille en bois nécessite un savoir-faire et une maîtrise embrassant plusieurs corps de métier.

Tout d'abord, le sylviculteur produit les arbres remarquables utilisés en tonnellerie, notamment pour les grands vins. Le merrandier choisit les bons arbres sur pied, en forêt et transforme les grumes sélectionnées en merrains tandis que le tonnelier travaille, assemble et chauffe les planches, ou merrains, issues du bois de ces arbres.

De manière connue, ces merrains subissent plusieurs opérations en vue de la réalisation d'un fût, dans lesquelles se manifestent les compétences du tonnelier.

Parmi ces opérations, on citera le « jointage » qui consiste à usiner les chants des douelles avec l'angle adéquat de manière à assurer l'étanchéité entre les douelles du futur fût. L'usinage permet également de donner une forme en fuseau à la douelle.

Le dolage consiste à raboter la face extérieure de la douelle afin de générer une forme convexe en adéquation avec les profils recherchés.

L'évidage consiste à raboter la face intérieure de la douelle afin d'obtenir une forme concave d'épaisseur constante sur toute la largeur de la douelle.

Les merrains ainsi travaillés sont appelés des douelles.

Typiquement, les merrains, ou planches de bois massif, utilisées pour réaliser les douelles ont, à titre illustratif, une épaisseur comprise entre 22 et 45 mm, pour une longueur de l'ordre de 80 cm à 130 cm.

Une pluralité de ces douelles est ensuite dressée par le tonnelier, face concave vers l'intérieur, ces douelles étant maintenues entre elles à leur extrémité par un cercle métallique épais.

D'autres cercles sont ensuite positionnés par le tonnelier à la force du marteau tandis que les douelles du futur contenant, sont soumises à une étape de chauffe et d'humidification de manière à être progressivement cintrées à l'aide d'un câble de cabestan.

Une fois la forme finale du fût obtenue, elle est bloquée par des cercles placés à l'autre extrémité de ce dernier.

Bien que le chêne soit considéré depuis toujours comme un bois de qualité exceptionnelle pour la vinification et l'élevage du vin, d'autres essences de bois peuvent être utilisées, par exemple le châtaigner et l'acacia.

Cependant, on observe depuis plusieurs années, une dégradation importante de l'état sanitaire des chênaies et des châtaigneraies dans certaines régions françaises.

Des maladies des arbres telles que la maladie de l'encre causée par des agents pathogènes invasifs, sont notamment responsables de cette dégradation.

Or, non seulement les conditions climatiques, hivers doux et printemps pluvieux, favorisent l'extension de ces maladies sur le territoire français, ainsi que dans d'autres pays européens, mais la récurrence des sécheresses estivales, constatées depuis 2015, source de stress hydrique et de stress thermique, amplifie la mortalité des arbres.

De plus, des évènements météorologiques intenses, tels que des tempêtes, peuvent également contribuer localement à ce recul sensible du peuplement de certaines essences de bois utilisées traditionnellement en tonnellerie.

Il en résulte une raréfaction de certains bois nobles tels que le chêne, une élévation des coûts du bois, et ce, d'autant que d'autres domaines d'activité telles que la menuiserie ou la construction, exercent également une pression croissante sur ces bois.

Il existe donc un besoin pressant pour mieux optimiser les ressources naturelles qui se raréfient, en limitant la quantité de bois de première qualité utilisé en tonnellerie.

On connaît de l'état de l'art, des lattes pour former des douelles, qui sont formées par l'assemblage de plusieurs épaisseurs par collage. Ces épaisseurs peuvent intégrer un film d'étanchéité.

Toutefois, force est de constater que, tant l'adhésif utilisé dans le collage de ces différentes épaisseurs, que le film d'étanchéité, constituent des barrières s'opposant au passage de l'oxygène au travers des douelles d'un contenant.

Or, comme rapporté ci-dessus, la porosité du bois notamment du chêne, permet une oxygénation lente et régulière du liquide contenu dans un fût, ce qui autorise certaines réactions d'oxydation particulièrement intéressantes dans le vieillissement et l'élevage de vin et de boissons alcoolisées.

La suppression de cette oxygénation ne permet donc pas de tirer profit de ses multiples impacts bénéfiques sur le vin (couleur, aromatique et structure).

De plus, les œnologues expriment une réticence particulière à l'utilisation de ces lattes, issues d'un assemblage d'épaisseurs par collage, en tonnellerie craignant une possible migration de composés chimiques provenant de l'adhésif vers le liquide contenu dans le fût.

Ainsi, ces lattes présentent des inconvénients intrinsèques difficilement surmontables, les rendant impropres pour un usage en tonnellerie, notamment pour le vieillissement et l'élevage de grands vins.

### Objet de l'invention

La présente invention a pour but de surmonter les inconvénients de l'art antérieur et de répondre aux contraintes ci-dessus énoncées en proposant un merrain pour la réalisation de douelles de contenant en bois, simple dans sa conception et dans son mode opératoire, intégralement réalisé en bois, tout en permettant de diminuer la quantité de bois de première qualité tel que le chêne, utilisée dans la fabrication du merrain.

Un autre objet de la présente invention est un tel merrain dont la lame de bois destinée à définir la surface extérieure de la douelle ne risque pas de présenter des défauts, notamment un éclatement de certaines de ses fibres, lors du cintrage de la douelle par chauffe traditionnelle.

Encore un autre objet de la présente invention est un tel merrain dont l'assemblage de ses deux lames de bois constitutives est facilité.

Encore un autre objet de la présente invention est un tel merrain dont la lame de bois destinée à définir la surface extérieure de la douelle peut présenter un intérêt organoleptique de par ses composés aromatiques intrinsèques.

Le présent enseignement vise également un contenant en bois dont les douelles sont formées à partir de tels merrains.

### Exposé de l'invention

A cet effet, l'invention concerne un merrain pour la réalisation de douelle de contenant en bois tel qu'une barrique, ledit merrain étant constitué :
- d'une première lame de bois réalisée dans un premier bois, dit essence de bois raréfiée, dont une face est destinée à former la face intérieure de la douelle, l'épaisseur de cette première lame de bois étant inférieure ou égale à 20 mm, de préférence inférieure ou égale à 17 mm, et encore mieux inférieure ou égale à 15 mm,
- une seconde lame de bois dont une face est destinée à former la face extérieure de la douelle, ladite seconde lame de bois étant réalisée dans un second bois, différent du premier bois,
- lesdites première et seconde lames de bois étant uniquement assemblées entre elles par un assemblage à tenon et mortaise, sans aucun liant adhésif tel qu'une colle, l'assemblage étant à jeu négatif,
- la seconde lame de bois comportant une face dite face d'assemblage, comprenant un ou plusieurs tenons formant saillie de celle-ci, la première lame de bois comportant une face dite face d'assemblage, comprenant pour chaque tenon de la face d'assemblage de la seconde lame de bois, une mortaise correspondante, la ou les mortaises s'étendant le long de la face d'assemblage de la première lame de bois en dehors des extrémités de cette dernière, lesquelles sont chacune destinées à recevoir une saignée, ou jable, pour le positionnement d'une pièce de fermeture, ou fond..

Ce merrain est ainsi avantageusement d'un seul bloc, ou encore monolithique, de sorte qu'il peut être usiné et mis en forme selon des procédés traditionnellement utilisés en tonnellerie.

Ce merrain est obtenu par un assemblage serré, à tenons et mortaises, ou encore à jeu négatif, de la face d'assemblage de la première lame de bois et de la face d'assemblage de seconde lame de bois. Autrement dit, ces faces d'assemblage sont assemblées entre elles pour former le merrain.

Il est particulièrement intéressant de diviser par deux l'épaisseur des merrains existants dans les standards de la profession pour obtenir des épaisseurs de bois précieux inférieures à 20 mm.

La conception originale de ce merrain permet avantageusement de minimiser la quantité de bois précieux, ou encore de première qualité, tel que du chêne, utilisée dans la fabrication de la première lame de bois, tout en excluant un apport possible de substances chimiques « étrangères » au bois, apportées par exemple par l'utilisation de compositions adhésives ou de films d'étanchéité.

Ainsi, tout en maintenant l'apport des composés chimiques extractibles recherchés dans l'élevage d'un vin ou d'une boisson alcoolisée, on s'assure par la conception originale de ce merrain, d'une minimisation de la quantité de bois précieux utilisée pour sa formation et d'une oxygénation du liquide contenu dans le contenant en bois formé à partir de ces merrains, au travers de ces merrains.

Une telle conception va à l'encontre des préjugés de l'homme du métier. Ces derniers ont en effet le souci de coller ensemble plusieurs couches de bois pour créer une latte épaisse, principalement pour des raisons d'esthétisme du contenant final et par crainte de compromettre notamment l'étanchéité de ce dernier.

Le présent enseignement apporte de nombreux avantages.

Le prix de revient du merrain est diminué en raison d'une minimisation du bois raréfié mis en œuvre. On constate une consommation de matière de qualité, telle que le chêne, moindre d'environ 40 pourcent

Les épaisseurs de lames étant plus minces que dans l'état de l'art, il est constaté qu'il existe moins de risques de casse et donc de perte de matière et de temps de réparation pendant la chauffe (étape de cintrage).

Il est possible de prendre un bois local pour réaliser la seconde lame de bois, c'est-à-dire une matière première proche de la tonnellerie, ce qui diminue notamment les coûts d'approvisionnement.

Il a également été observé la bonne tenue mécanique des douelles formées à partir du merrain décrit ci-dessus, après démontage, permettant l'envoi de contenants en bois démontés pour l'export.

Selon un mode de réalisation particulier de ce merrain, la face de ladite seconde lame, opposée à celle destinée à former la face extérieure de la douelle, dite face d'assemblage, comprend un ou plusieurs tenons formant saillie de celle-ci en s'étendant le long de l'axe longitudinal dudit merrain, la face de la première lame de bois, opposée à celle destinée à former la face intérieure de la douelle, comportant pour chaque tenon de la face d'assemblage de ladite seconde lame de bois, une mortaise correspondante s'étendant le long de l'axe longitudinal dudit merrain.

Cette disposition des tenons et des mortaises le long des axes longitudinaux des première et seconde lames de bois, joue un double rôle.

Tout d'abord, elle garantit lors du cintrage de la douelle par chauffe, une liberté de mouvement de la seconde lame par rapport à la première lame le long de la direction longitudinale de ces lames, de sorte que la seconde lame, soumise à une courbure plus importante que la première lame, ne risque pas de présenter des défauts, notamment un éclatement de certaines de ses fibres de bois.

De plus, dans une barrique, le vin est typiquement en contact avec la surface longitudinale radiale du bois de chêne, et de ce fait, les nombreux rayons médullaires du bois sont considérés comme formant des barrières naturelles contre la diffusion du liquide dans une direction tangentielle à la paroi du corps de la barrique.

Ces rayons médullaires étant importants pour garantir l'imperméabilité d'une douelle au vin, en disposant la ou les mortaises dans la direction longitudinale de la première lame de bois, on réduit le risque d'apparition de fuites.

Selon un autre mode de réalisation de ce merrain, la première lame de bois est réalisée en chêne ou en châtaigner.

Selon encore un autre mode de réalisation de ce merrain, le bois constitutif de la première lame de bois ayant une densité d₁, le bois constitutif de ladite seconde lame de bois présente une densité d₂, ou masse volumique, inférieure ou égale à la densité d₁, ou masse volumique, du bois constitutif de la première lame de bois.

De manière connue, la densité du bois sec à l'air, que l'on appelle « densité du bois », est le rapport entre la masse et le volume de l'échantillon conditionné à environ 12 p. 100 de taux d'humidité.

A titre d'exemple, le chêne présente une densité de 0,74, le hêtre une densité de 0,71, le frêne une densité de 0,68 et le châtaigner une densité de 0,64 (https://tropix.cirad.fr/fiches-disponibles).

De préférence, le bois constitutif de la seconde lame de bois est choisi dans le groupe comprenant le frêne, le hêtre, le charme, l'acacia, ou un bois résineux ou encore un bois exotique tel que le fuma encore appelé, bois fromager, ...

De préférence, la seconde lame de bois est sèche, voire très sèche, pour éviter le risque d'une ouverture des joints dans le temps. Le taux maximum d'humidité du bois constitutif de la seconde lame est inférieur ou égal à 15% HR, et encore mieux compris entre 12% HR et 15% HR.

Il est ainsi possible d'utiliser des bois susceptibles de conférer un ou plusieurs arômes particuliers au liquide contenu dans le contenant en bois. A titre d'exemple, il peut s'agir de certains bois exotiques tels que le citronnier, l'eucalyptus ou encore le cèdre.

Il est donc possible de compléter sur le plan aromatique avec une « peau extérieure » (seconde lame de bois) réalisée en bois parfumé.

Selon encore un autre mode de réalisation de ce merrain, chaque tenon présente une section transversale droite de forme rectangulaire, semi-circulaire aux extrémités, trapézoïdale, en double tenon, en oméga ou encore cylindrique, et est agencé pour coopérer avec une mortaise, ou évidement, correspondante, de section transversale droite de forme complémentaire, ou encore leurs profils étant conjugués, formée dans la face d'assemblage de la première lame de bois.

Alternativement, chaque tenon peut s'étendre verticalement à partir de la face d'assemblage de la seconde lame de bois en présentant une section transversale droite en forme de trapèze, et en étant agencé pour coopérer avec un évidement de section transversale droite en forme de trapèze complémentaire, ou encore leurs profils étant conjugués, formé dans la face d'assemblage de la première lame.
Dans ce dernier cas, il s'agit d'un assemblage en queue d'aronde.

Selon encore un autre mode de réalisation de ce merrain, chaque tenon présentant une section transversale droite en forme de trapèze, ce tenon présente des angles arrondis.
De manière avantageuse, on limite ainsi le risque d'éclatement du bois lors du cintrage du merrain.

Il pourrait encore s'agir d'un assemblage en queue d'aronde avec des formes rondes en oméga mâle et femelle ou encore en C arrondi mâle et femelle.

Selon encore un autre mode de réalisation de ce merrain, la première lame de bois présente une épaisseur minimale supérieure ou égale à la somme de la profondeur de pénétration du liquide dans le premier bois, de la profondeur maximale de mortaise et d'une épaisseur de sécurité comprise entre 1 et 4 mm, encore mieux entre 2 et 4 mm.
De manière avantageuse, cette épaisseur de sécurité, encore appelée zone tampon, permet d'éviter d'éventuelles fuites de liquide dans le temps au travers de la première lame de bois.

Selon encore un autre mode de réalisation de ce merrain, l'épaisseur de la première lame de bois est comprise entre 12 mm et 17 mm, de préférence entre 12 et 15 mm, et encore mieux entre 13 et 15 mm.

Selon encore un autre mode de réalisation de ce merrain, l'épaisseur de ladite seconde lame, tenons inclus, est égale ou sensiblement égale à celle de ladite première lame de bois.

Cette lame extérieure pourrait ainsi présenter une épaisseur de l'ordre de 15 mm avant usinage. Ne jouant aucun rôle d'étanchéité, une telle épaisseur de la seconde lame de bois permettrait d'économiser davantage la ressource bois.

Selon encore un autre mode de réalisation de ce merrain, la ou les mortaises s'étendent le long de la face d'assemblage de la première lame de bois en dehors des extrémités de cette dernière.

En effet, les extrémités du merrain sont destinées lors d'une étape dite de rognage, à recevoir une saignée, ou jable, permettant le positionnement axial d'un élément de fermeture encore appelé pièce de fond.

On évite ainsi le risque de perte d'une ou des extrémités de la première lame de bois lorsqu'on réalise l'enlèvement de matière pour définir les saignées destinées à revoir les fonds du contenant.

Selon encore un autre mode de réalisation de ce merrain, chaque mortaise est continue, ou encore est non discontinue, c'est-à-dire non formée de portions de mortaise séparées.

De préférence, chaque mortaise s'étend longitudinalement dans la portion centrale de la première lame de bois, c'est-à-dire en dehors des extrémités de la face d'assemblage de cette première lame de bois.

On observe une meilleure tenue mécanique du merrain ainsi obtenue.

Alternativement, cette ou ces mortaises pourraient être espacées les unes des autres dans le sens longitudinal de la première lame de bois, par exemple en étant disposées en quinconces.

Selon encore un autre mode de réalisation de ce merrain, la première lame de bois comportant au moins trois mortaises, ces mortaises sont espacées régulièrement, ou non, sur la largeur de la première lame de bois.

Selon encore un autre mode de réalisation de ce merrain, chaque tenon ayant une section transversale droite de forme rectangulaire, au moins une des extrémités longitudinales de chaque tenon présente un biseau, ou portion d'extrémité inclinée, tandis que la ou les extrémités correspondantes de chaque mortaise présentent une partie inclinée complémentaire à celle du tenon correspondant, ou encore leurs profils étant conjugués, pour permettre leur engagement progressif.
Cette configuration des tenons et mortaises facilite l'assemblage des faces d'assemblages des première et seconde lames de bois.

Selon encore un autre mode de réalisation de ce merrain, la première lame de bois présente une épaisseur constante ou sensiblement constante le long de sa dimension longitudinale, la première lame et la seconde lame ayant une longueur identique, avant cintrage.

De manière plus générale, la présente invention concerne aussi un merrain pour la réalisation de douelle de contenant en bois tel qu'une barrique, ledit merrain étant constitué :
- d'une première lame de bois réalisée dans un premier bois, dit essence de bois raréfiée, dont une face est destinée à former la face intérieure de la douelle,
- une seconde lame de bois dont une face est destinée à former la face extérieure de la douelle, ladite seconde lame étant réalisée dans un second bois, différent du premier bois,
- lesdites première et seconde lames de bois étant uniquement assemblées entre elles par un assemblage à tenon et mortaise,
- la face de ladite seconde lame, opposée à celle destinée à former la face extérieure de la douelle, dite face d'assemblage, comprenant un ou plusieurs tenons formant saillie de celle-ci, la face de la première lame de bois, opposée à celle destinée à former la face intérieure de la douelle, comportant pour chaque tenon de la face d'assemblage de ladite seconde lame de bois, une mortaise correspondante.

La présente invention concerne également un contenant en bois pour l'élevage ou le vieillissement d'un liquide tel que du vin ou une boisson alcoolisée, par exemple un spiritueux.
Selon l'invention, les douelles formant le corps de ce contenant sont des merrains tels que décrits précédemment. De manière avantageuse, ces merrains ont été travaillés selon les procédés traditionnels de tonnellerie pour former ces douelles.

De manière connue, le corps de ce contenant constitue un cadre rigide ouvert sensiblement cylindrique, lequel est constitué d'une pluralité de douelles de bois réunies de manière jointive au moyen d'au moins un cerclage serrant bord à bord, ou encore chant contre chant, ces douelles. Le corps de ce contenant est fermé par des fonds.

Un tel contenant en bois peut présenter différents volumes et formes. Il peut s'agir d'un fût, d'une barrique, d'une pièce, d'un tonneau ou foudre.

De manière avantageuse, la section transversale droite de chaque douelle de ce contenant est droite ou sensiblement droite au niveau de sa face intérieure.

Ainsi, la face intérieure de la douelle n'est pas préalablement creusée pour enlever de l'épaisseur en vue de faciliter son cintrage.

De manière avantageuse, il est ainsi possible de conserver le maximum de matière là où elle est nécessaire.

La présente invention concerne aussi un procédé de fabrication d'un contenant en bois pour l'élevage ou le vieillissement d'un liquide tel que du vin ou une boisson alcoolisée, par exemple un spiritueux, comprenant au moins les étapes suivantes :
- fournir un lot de merrains tels que décrits précédemment,
- usiner chaque merrain de ce lot pour former des douelles identiques ayant la même configuration, sans enlever de matière à la face libre de la première lame de bois, en dehors de ses extrémités afin de ménager des biseaux et des saignées, ou jables dans la douelle correspondante.

Ainsi, ce procédé comporte une étape d'usinage de chaque douelle issue d'un lot de merrains afin de former des douelles identiques. De préférence, il s'agit ici de former des douelles de mêmes dimensions et présentant une même configuration, ou géométrie, cette étape d'usinage étant réalisée sans évidage de la face intérieure de la douelle, ou face libre de la première lame de bois, qui est opposée à sa face d'assemblage.

Cette étape d'usinage peut comprendre une sous-étape d'usinage de chaque bord longitudinal, ou champ, du merrain pour donner la pente des joints. Cette sous-étape est encore connue sous le nom de « jointage ».

Elle peut comporter également une sous-étape d'usinage consistant à réaliser la partie bombée de la face extérieure de la douelle, ou face libre de la seconde lame de bois, qui est opposée à sa face d'assemblage. Cette sous-étape est encore connue sous le nom de « dolage ».

Bien entendu, après l'étape d'usinage, la douelle subit une étape de cintrage.

Ce procédé de fabrication peut encore comporte une étape de chauffe aromatique de la face intérieure de la première lame de bois.

Le procédé de fabrication d'un contenant est donc plus rapide tout en conservant le maximum de bois noble.

De manière plus générale, la présente invention concerne encore un merrain pour la réalisation de douelle de contenant en bois tel qu'une barrique, ledit merrain étant constitué :
- d'une première lame de bois réalisée dans un premier bois, dit essence de bois raréfiée, dont une face est destinée à former la face intérieure de la douelle, l'épaisseur de cette première lame de bois étant inférieure ou égale à 20 mm, de préférence inférieure ou égale à 17 mm, et encore mieux inférieure ou égale à 15 mm,
- une seconde lame de bois dont une face est destinée à former la face extérieure de la douelle, ladite seconde lame étant réalisée dans un second bois, différent du premier bois,
- lesdites première et seconde lames de bois étant uniquement assemblées entre elles par un assemblage à tenon et mortaise, sans aucun liant adhésif tel qu'une colle,
- la face de ladite seconde lame, opposée à celle destinée à former la face extérieure de la douelle, dite face d'assemblage, comprenant un ou plusieurs tenons formant saillie de celle-ci, la face de la première lame de bois, opposée à celle destinée à former la face intérieure de la douelle, comportant pour chaque tenon de la face d'assemblage de ladite seconde lame de bois, une mortaise correspondante.

Ce merrain est ainsi avantageusement d'un seul bloc, ou encore monolithique, de sorte qu'il peut être usiné et mis en forme selon des procédés traditionnellement utilisés en tonnellerie.

Il est particulièrement intéressant de diviser par deux l'épaisseur des merrains existants dans les standards de la profession pour obtenir des épaisseurs de bois précieux inférieures à 20 mm.

La conception originale de ce merrain permet avantageusement de minimiser la quantité de bois précieux, ou encore de première qualité, tel que du chêne, utilisée dans la fabrication de la première lame de bois, tout en excluant un apport possible de substances chimiques « étrangères » au bois, apportées par exemple par l'utilisation de compositions adhésives ou de films d'étanchéité.

Ainsi, tout en maintenant l'apport des composés chimiques extractibles recherchés dans l'élevage d'un vin ou d'une boisson alcoolisée, on s'assure par la conception originale de ce merrain, d'une minimisation de la quantité de bois précieux utilisée pour sa formation et d'une oxygénation du liquide contenu dans le contenant en bois formé à partir de ces merrains, au travers de ces merrains.

Une telle conception va à l'encontre des préjugés de l'homme du métier. Ces derniers ont en effet le souci de coller ensemble plusieurs couches de bois pour créer une latte épaisse, principalement pour des raisons d'esthétisme du contenant final et par crainte de compromettre notamment l'étanchéité de ce dernier.

Selon encore un autre mode de réalisation de ce merrain, chaque tenon s'étend verticalement à partir de la face d'assemblage de la seconde lame de bois en présentant une section transversale droite de forme rectangulaire, et en étant agencé pour coopérer avec un évidement correspondant de section transversale droite de forme rectangulaire complémentaire formé dans la face d'assemblage de la première lame, l'assemblage étant à jeu négatif.

Alternativement, chaque tenon peut s'étendre verticalement à partir de la face d'assemblage de la seconde lame de bois en présentant une section transversale droite en forme de trapèze, et en étant agencé pour coopérer avec un évidement de section transversale droite en forme de trapèze complémentaire, formé dans la face d'assemblage de la première lame.
Dans ce dernier cas, il s'agit d'un assemblage en queue d'aronde.

Selon encore un autre mode de réalisation de ce merrain, chaque tenon présentant une section transversale droite en forme de trapèze, ce tenon présente des angles arrondis.
De manière avantageuse, on limite ainsi le risque d'éclatement du bois lors du cintrage du merrain.

Il pourrait encore s'agir d'un assemblage en queue d'aronde avec des formes rondes en oméga mâle et femelle ou encore en C arrondi mâle et femelle.

Selon encore un autre mode de réalisation de ce merrain, la première lame de bois présente une épaisseur minimale supérieure ou égale à la somme de la profondeur de pénétration du liquide dans le premier bois, de la profondeur maximale de mortaise et d'une épaisseur de sécurité comprise entre 1 et 4 mm, encore mieux entre 2 et 4 mm.
De manière avantageuse, cette épaisseur de sécurité, encore appelée zone tampon, permet d'éviter d'éventuelles fuites de liquide dans le temps au travers de la première lame de bois.

Selon encore un autre mode de réalisation de ce merrain, l'épaisseur de la première lame de bois est comprise entre 12 mm et 17 mm, de préférence entre 12 et 15 mm, et encore mieux entre 13 et 15 mm.

Selon encore un autre mode de réalisation de ce merrain, l'épaisseur de ladite seconde lame, tenons inclus, est égale ou sensiblement égale à celle de ladite première lame de bois.

Cette lame extérieure pourrait ainsi présenter une épaisseur de l'ordre de 15 mm avant usinage. Ne jouant aucun rôle d'étanchéité, une telle épaisseur de la seconde lame de bois permettrait d'économiser davantage la ressource bois.

Selon encore un autre mode de réalisation de ce merrain, la ou les mortaises s'étendent le long de la face d'assemblage de la première lame de bois en dehors des extrémités de cette dernière.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**

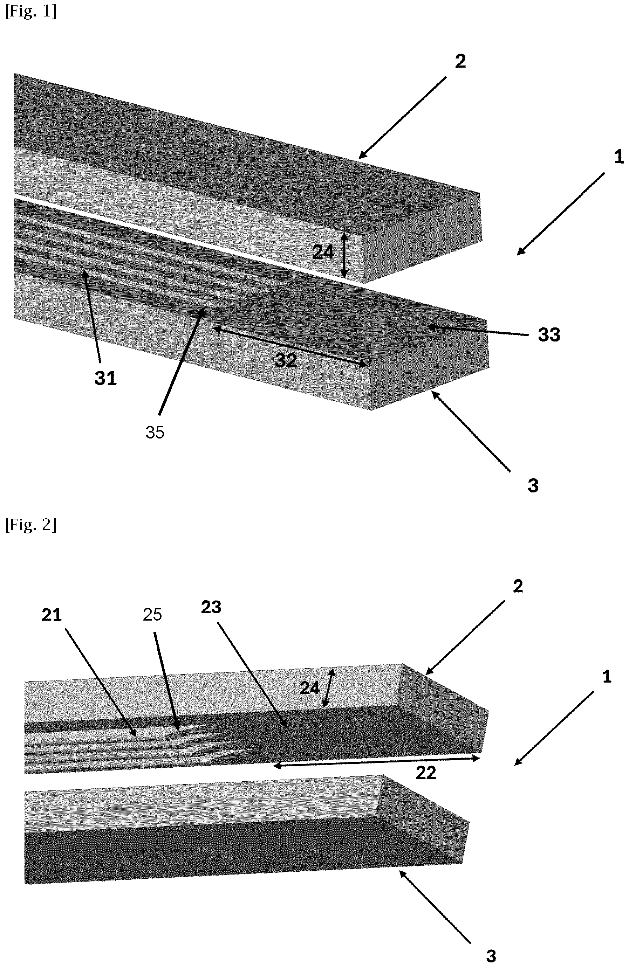

   [Fig. 1] est une vue éclatée et en perspective d'un merrain selon un premier mode de réalisation particulier de la présente invention, cette vue permettant de visualiser les mortaises de la première lame de bois, l'assemblage entre la première lame de bois et la seconde lame de bois étant un assemblage serré par tenon-mortaise, ou encore un assemblage à jeu négatif ;
**Fig. 2**
   [Fig. 2] est une autre vue en perspective et éclatée du merrain illustré à la Fig. 1, cette vue permettant de visualiser les tenons dans la seconde lame de bois ;
**Fig. 3**

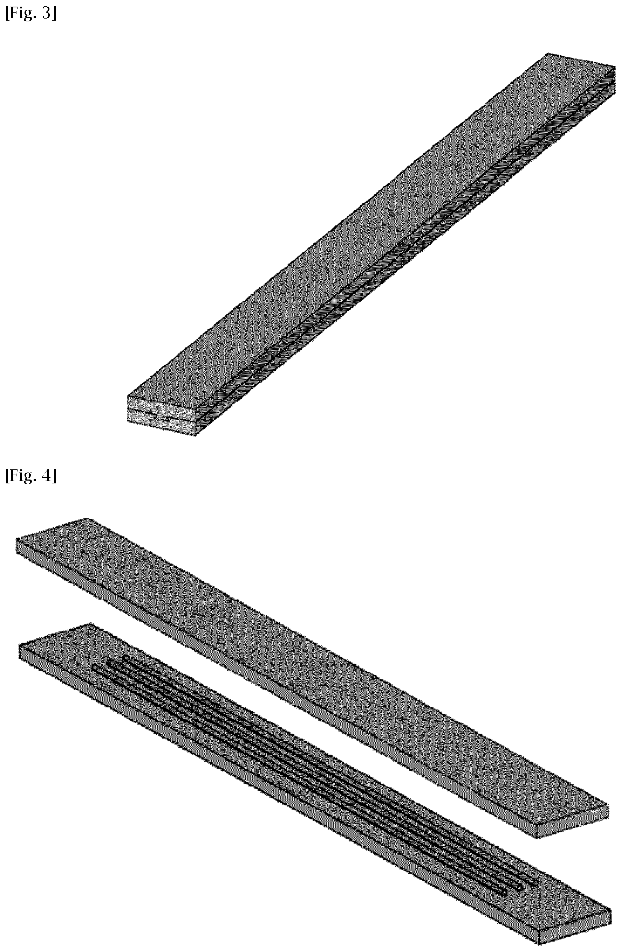

   [Fig. 3] illustre un merrain selon un second mode de réalisation de la présente invention, l'assemblage entre la première lame de bois et la seconde lame de bois étant à queue d'aronde, l'unique tenon s'étendant verticalement à partir de la face d'assemblage de la seconde lame de bois en présentant une section transversale droite en forme de trapèze aux angles arrondis ;
**Fig. 4**
   [Fig. 4] illustre une vue éclatée et en perspective d'un merrain selon un troisième mode de réalisation de la présente invention, l'assemblage entre la première lame de bois et la seconde lame de bois étant un assemblage avec des formes rondes en oméga mâle et femelle ;
**Fig. 5**

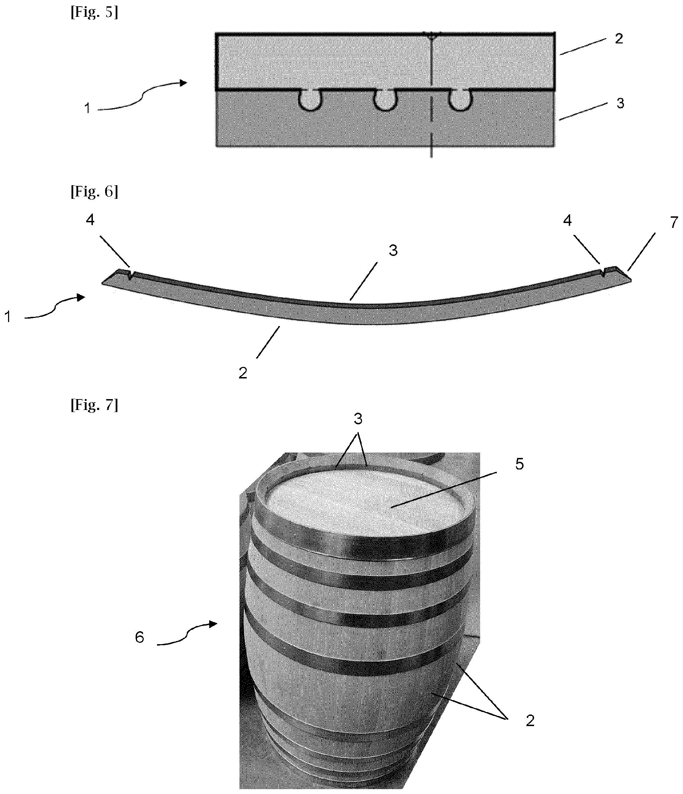

   [Fig. 5] est une vue en coupe du merrain illustré à la Fig. 4, cette vue permettant de visualiser les tenons formant saillie de la face d'assemblage de la seconde lame de bois et les mortaises placées dans la première lame de bois, ces tenons et mortaises présentant respectivement des sections transversales droites avec des formes rondes en oméga mâles et femelles ;
**Fig. 6**
   [Fig. 6] est une vue de profil d'une douelle formée à partir d'un merrain illustré à la Fig. 4, cette douelle étant usinée et mise en forme, ou encore cintrée, pour donner la forme du corps du contenant en bois ;
**Fig. 7**
   [Fig. 7] est une vue en perspective d'un contenant en bois dont le corps a été obtenu à partir d'un ensemble de douelles formées de merrains illustrés à la Fig. 4 ;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 et 2 illustrent de manière schématique un merrain selon un mode de réalisation particulier de la présente invention.

Ce merrain 1 est constitué d'une première lame 3 de bois, ici du chêne français, et d'une seconde lame 2 de bois, ici du frêne, qui sont assemblées entre elles par un assemblage serré à tenons et mortaises, ou encore un assemblage à jeu négatif.

On entend ici par « assemblage serré » que le jeu d'encastrement est négatif et que cet assemblage des deux lames 2, 3 de bois est donc réalisé en force par exemple au moyen d'une presse. Ce type d'assemblage est particulièrement solide.

Les deux lames 2, 3 de bois présentent sur leurs faces d'assemblage 23, 33, c'est-à-dire les surfaces en contact lorsque les lames sont assemblées entre elles, des éléments d'assemblage mécanique 21, 31.

La face de la première lame 3 de bois, opposée à sa face d'assemblage 33, est destinée à former la face intérieure de la douelle, l'épaisseur de cette première lame 3 de bois étant ici de l'ordre de 15 mm.

Il est ainsi possible d'utiliser des merrains standards actuels d'épaisseur 32 mm pour les transformer en deux merrains d'épaisseur de 14-15 mm.

De la même façon, pour les fûts de 600 à 800L, les tonneliers utilisent traditionnellement des merrains de 38 à 45 mm d'épaisseur, qui peuvent être refendus aisément sans perdre leurs intégrités respectives.

La face de la seconde lame 2 de bois, opposée à sa face d'assemblage 23, est destinée à former la face extérieure de la douelle, cette seconde lame 2 présentant une épaisseur 24 minimale, c'est-à-dire en dehors de ses éléments d'assemblage 21, égale à celle de la première lame 3 de bois.

Ces deux lames de bois 2, 3 sont uniquement assemblées entre elles par un assemblage à tenon et mortaise, sans aucun liant adhésif tel qu'une colle.

La face d'assemblage 23 de la seconde lame 2 comprend ici quatre tenons 21 régulièrement espacés dans la largeur de la lame et s'étendant longitudinalement dans une partie centrale de la seconde lame 21.

Les extrémités de cette seconde lame 2 sont donc dépourvues d'élément d'assemblage mécanique 21 sur une certaine distance 22.

Chacun de ces tenons 21 forme ainsi saillie de la face d'assemblage 23 en s'étendant le long de l'axe longitudinal de la seconde lame 2, en présentant une section transversale droite de forme rectangulaire dans sa partie centrale. Les extrémités de chaque tenon 21 présente chacune une portion inclinée 25.

Cette seconde lame de bois 2 présente un taux d'humidité maximum compris entre 12% HR et 15% HR pour éviter une ouverture des joints dans le temps.

La face d'assemblage 33 de la première lame 3 de bois comporte pour chaque tenon 21 de la face d'assemblage 23 de la seconde lame 2 de bois, une mortaise 31 correspondante s'étendant le long de l'axe longitudinal de la première lame de bois. Les extrémités de chaque mortaise 31 comprennent de manière symétrique au tenon 21 correspondant, chacune, une portion inclinée 35 complémentaire de celle 25 du tenon 21 correspondant.

De même, chaque mortaise 31 est continue et s'étend dans une partie centrale de la première lame 3 de bois, afin que les extrémités 22, 32 de ces deux lames de bois 2, 3 ainsi assemblées ne soient pas liées ensemble.

Sur une certaine distance 32, les extrémités de la face d'assemblage 31 de première lame de bois 3 sont donc pleines et de section rectangulaire, en étant dépourvues de mortaise 31.

Ces extrémités pourront donc avantageusement être usinées pour former des saignées 4 servant à fixer les pièces de fond 5 du fût sans fragiliser la douelle.

Il est observé que la première lame 3 de bois recevant uniquement des mortaises 31 réalisées dans son épaisseur, cette première lame 3 de bois précieux, est dépourvue d'éléments d'assemblage mécanique formant saillie, ou encore de tenons. Son épaisseur est ainsi maintenue à un minimum, ici de 15 mm.
A titre purement illustratif, chaque mortaise 31 présente ici une profondeur de mortaise de 5 mm.

La douelle formée ainsi de deux lames de bois 2, 3 assemblées mécaniquement, gagne en robustesse dans le temps par rapport à un assemblage par colle.

De manière avantageuse, la seconde lame de bois 2 est réalisée dans un bois plus souple que l'essence de la première lame de bois 3. Cela permet, lors de l'étape du cerclage, étape nécessaire à la fabrication d'une barrique, de répartir les efforts de compression des cercles sur la première lame de bois afin de minimiser le risque de casse. Préférentiellement le bois utilisé pour la réalisation de la première lame de bois est une essence de chêne, qui est un bois robuste.

Alternativement, la seconde lame de bois 2 peut être un bois très dur, mais présentant un taux d'humidité maximum compris entre 12% HR et 15% HR.

Les Figures 4 et 5 représentent un merrain selon un troisième mode de réalisation de la présente invention, l'assemblage entre la première lame de bois et la seconde lame de bois étant en oméga mâle et femelle. Il est considéré comme un assemblage à queue-d'aronde avec des congés dans les angles.

De nouveau, ces tenons et mortaises s'étendent longitudinalement dans les parties centrales des première et seconde lame à l'exclusion de leurs extrémités (huit derniers centimètres de chaque côté).

La Figure 6 est une vue de profil d'une douelle formée à partir d'un merrain illustré à la Fig. 4, cette douelle étant usinée et mise en forme, ou encore cintrée, pour donner la forme du corps du contenant en bois. Cette douelle comporte à ses extrémités, des biseaux 7 et deux saignées 4, encore appelées jables, destinées à recevoir des fonds 5 par leurs bords de profil conjugué.

## Revendications

1. Merrain (1) pour la réalisation de douelle de contenant en bois tel qu'une barrique, ledit merrain étant constitué :
- d'une première lame de bois (3) réalisée dans un premier bois, dit essence de bois raréfiée, dont une face est destinée à former la face intérieure de la douelle, l'épaisseur de cette première lame de bois (3) étant inférieure ou égale à 20 mm, de préférence inférieure ou égale à 17 mm, et encore mieux inférieure ou égale à 15 mm,
- une seconde lame de bois (2) dont une face est destinée à former la face extérieure de la douelle, ladite seconde lame de bois (2) étant réalisée dans un second bois, différent du premier bois,
- lesdites première et seconde lames de bois (2, 3) étant uniquement assemblées entre elles par un assemblage à tenon et mortaise, sans aucun liant adhésif tel qu'une colle, l'assemblage étant à jeu négatif,
- la seconde lame de bois (2) comportant une face dite face d'assemblage (23), comprenant un ou plusieurs tenons (21) formant saillie de celle-ci, la première lame de bois (3) comportant une face dite face d'assemblage (33), comprenant pour chaque tenon (21) de la face d'assemblage (23) de la seconde lame de bois (2), une mortaise (31) correspondante, la ou les mortaises (31) s'étendant le long de la face d'assemblage (33) de la première lame de bois (3) en dehors des extrémités (32) de cette dernière, lesquelles sont chacune destinées à recevoir une saignée, ou jable, (4) pour le positionnement d'une pièce de fermeture, ou fond (5).

2. Merrain selon la revendication 1, **caractérisé en ce que** la face d'assemblage (23) de la seconde lame de bois (2), comprend un ou plusieurs tenons (21) allongés placés en saillie de cette face d'assemblage (23), ce tenon (21) ou chacun de ces tenons (21) s'étendant le long de l'axe longitudinal dudit merrain.

3. Merrain selon la revendication 1 ou 2, **caractérisé en ce que** la première lame de bois (3) est réalisée en chêne ou en châtaigner.

4. Merrain selon l'une quelconque des revendications 1 à 3, **caractérisé en ce que** le bois constitutif de la première lame de bois (3) ayant une densité d₁, le bois constitutif de ladite seconde lame de bois (2) présente une densité d₂ inférieure ou égale à la densité d₁ du bois constitutif de la première lame de bois (3).

5. Merrain selon l'une quelconque des revendications précédentes, **caractérisé en ce que** le bois constitutif de la seconde lame de bois (2) est choisi dans le groupe comprenant le frêne, le hêtre, le charme, l'acacia, ou un bois résineux ou encore un bois exotique tel que le fuma encore appelé bois fromager, le citronnier, l'eucalyptus et le cèdre.

6. Merrain selon l'une quelconque des revendications précédentes, **caractérisé en ce que** chaque tenon (21) présente une section transversale droite de forme rectangulaire, semi-circulaire aux extrémités, trapézoïdale, en double tenon, en oméga ou encore cylindrique, et est agencé pour coopérer avec une mortaise (31), ou évidement, correspondante, de section transversale droite de forme complémentaire, formée dans la face d'assemblage (33) de la première lame de bois (3).

7. Merrain selon la revendication précédente, **caractérisé en ce que** chaque tenon (21) présentant une section transversale droite en forme de trapèze, ce tenon présente des angles arrondis.

8. Merrain selon l'une quelconque des revendications précédentes, **caractérisé en ce que** le taux maximum d'humidité du bois constitutif de la seconde lame (2) est inférieur ou égal à 15% HR, et encore mieux compris entre 12% HR et 15% HR.

9. Merrain selon l'une quelconque des revendications précédentes, **caractérisé en ce que** l'épaisseur de la première lame de bois (3) est comprise entre 12 mm et 17 mm, de préférence entre 12 et 15 mm, et encore mieux entre 13 et 15 mm.

10. Merrain selon l'une quelconque des revendications précédentes, **caractérisé en ce que** l'épaisseur de ladite seconde lame de bois (2) est égale ou sensiblement égale à celle de ladite première lame de bois (3).

11. Merrain selon l'une quelconque des revendications précédentes, **caractérisé en ce que** chaque mortaise (31) est continue et s'étend longitudinalement dans la portion centrale de la première lame de bois (3).

12. Merrain selon l'une quelconque des revendications précédentes, **caractérisé en ce que** la première lame de bois (3) comportant au moins trois mortaises (31), lesdites mortaises (31) sont espacées régulièrement sur la largeur de la première lame de bois (3).

13. Merrain selon l'une quelconque des revendications précédentes, **caractérisé en ce que** au moins une des extrémités longitudinales de chaque tenon (21) de la face d'assemblage (23) de la seconde lame de bois (2) présente un biseau (25), ou portion d'extrémité inclinée, tandis que la ou les extrémités correspondantes de chaque mortaise (31) de la face d'assemblage (33) de la première lame de bois (3) présentent une partie inclinée (35) complémentaire à celle du tenon (21) correspondant pour permettre leur engagement progressif.

14. Contenant en bois (6) pour l'élevage ou le vieillissement d'un liquide tel que du vin ou une boisson alcoolisée, **caractérisé en ce que** les douelles formant le corps de ce contenant sont des merrains (1) selon l'une quelconque des revendications 1 à 13.

15. Procédé de fabrication d'un contenant en bois (6) pour l'élevage ou le vieillissement d'un liquide tel que du vin ou une boisson alcoolisée, comprenant au moins les étapes suivantes :
- fournir un lot de merrains (1) selon l'une quelconque des revendications 1 à 13,
- usiner chaque merrain (1) de ce lot pour former des douelles identiques ayant la même configuration, sans enlever de matière à la face libre de la première lame de bois (3), en dehors de ses extrémités (32) afin de ménager des biseaux (7) et des saignées, ou jables (4) dans la douelle correspondante.
